# EUROPEAN PATENT APPLICATION

(11) **EP 4 790 636 A2**
(43) Date of publication of application: **12.08.2026**
(21) Application number: 26151771.8
(22) Date of filing: 14.01.2026
(51) Int. Cl.: G06T 5/60, G06T 5/70, G06T 7/00

(54) **METHOD AND APPARATUS WITH ANOMALY DETECTION**

(30) Priority: 17.01.2025 KR 20250007277
(71) Applicant: Samsung Electronics Co., Ltd, Suwon-si, Gyeonggi-do 16677 (KR)
(72) Inventor: LEE, Sucheol, 16678 Suwon-si (KR); KIM, Jiwhan, 16678 Suwon-si (KR); SHIM, Hajin, 16678 Suwon-si (KR); AHN, Minsu, 16678 Suwon-si (KR); JANG, dong Hwan, 16678 Suwon-si (KR)
(74) Representative: Arnold & Siedsma

(57) **Abstract**

A method to be executed by processing circuitry comprising one or more processors, a memory, an encoder and a decoder. The method includes inputting a measured image into an encoder, obtaining a feature produced from the encoder as a noise-invariant feature, passing the noise-invariant feature to a decoder, obtaining an image produced by the decoder as a denoised image, and detecting a local anomaly of the measured image by using the noise-invariant feature. The method may involve detecting one or more of a shape anomaly, a particle anomaly, and a crack anomaly for the measured image by using the noise-invariant feature. Further, the method may involve detecting a global anomaly in the measured image by using the denoised image.

## Description

### BACKGROUND

### (a) Field of the Invention

The disclosure relates to a method and device with anomaly detection in measured images.

### (b) Description of the Related Art

High resolution images may be used to analyze microstructures in semiconductor manufacturing processes. The high resolution images may include images produced by an optical microscope, an electron microscope, or other high resolution photographing equipment, such as scanning electron microscope (SEM) images. However, these images typically may include noise, and attempts have been made to remove noise from these images by exploiting a limited expressive power of auto-encoders to restore clean images from the images which have noise in them (i.e., noisy images). However, no typical method effectively extracts noise-independent information from the noisy images. For example, SEM images used for semiconductor metrology and inspection may include a structural deformation as well as be noisy. In such cases, it may be important to restore a clean image and to simultaneously an extract structural information independent of the image's noise.

### SUMMARY

This Summary is provided to introduce the disclosure that is further described below in the Detailed Description. The scope of the claimed subject matter is provided by the accompanying claims.

In an aspect, there is provided a method to be executed by processing circuitry comprising one or more processors, a memory, an encoder and a decoder. The method includes inputting a measured image into the encoder, obtaining a feature produced from the encoder as a noise-invariant feature, passing the noise-invariant feature to the decoder, obtaining an image produced by the decoder as a denoised image, and detecting a local anomaly of the measured image by using the noise-invariant feature.

The detecting the local anomaly may include detecting one or more of a shape anomaly, a particle anomaly, and a crack anomaly for the measured image by using the noise-invariant feature.

The method may include detecting a global anomaly in the measured image by using the denoised image.

The detecting the global anomaly may include detecting one or more of a noise anomaly, a blur anomaly, and a contrast anomaly of the measured image by using the denoised image.

The method may include training the encoder and decoder based on an input image provided to the encoder, a first loss function related to the global anomaly detection of the measured image, and a second loss function related to the local anomaly detection of the measured image.

The first loss function may be generated to minimize a first difference between the input image and a reconstructed image obtained by passing the input image through the encoder and the decoder.

The second loss function may be generated to minimize a second difference between first information obtained by passing the reconstructed image through the encoder and second information obtained by passing the input image through the encoder.

The method may include generating the input image, the generating the input image including selecting a pair of images, the pair of images being a first image and a second image being similar to each other according to a similarity evaluation metric, adding synthesis noise to the first image and the second image, and substituting a first portion of first pixel values from the first image with corresponding second pixel values of the second image, the substituted first pixel values being placed at first locations in the first image corresponding to respective second locations in the second image.

In an embodiment and/or an aspect, there is provided a method to be executed by processing circuitry comprising one or more processors (510), a memory, an encoder and a decoder. The method includes loading a first loss function related to a global anomaly detection of a measured image into a memory, loading a second loss function related to a local anomaly detection of the measured image into the memory, and training an encoder and a decoder based on an input image being provided to the encoder, the first loss function, and the second loss function.

The method may include generating a reconstructed image by passing the input image through the encoder and the decoder, the first loss function being generated to minimize a first difference between the input image and the reconstructed image.

The generating of the first loss function may be determined by a first equation of${L}_{rec} = Diff \left({Dec}_{θ}\left({Enc}_{θ}\left(X+∈\right)\right),X\right) ,$ L_{rec} being the first loss function, *Diff* being a function of measuring the first difference , *Enc_{θ}* being a function of the encoder, *Dec_{θ}* being a function of the decoder, *θ* being a parameter of the encoder and the decoder, *X* being the input image, and *ε* being additional noise.

The second loss function may be generated to minimize a second difference between first information obtained by passing the reconstructed image through the encoder and second information obtained by passing the input image through the encoder.

The generating of the second loss function may be determined by a second equation of ${L}_{consist} = Diff \left({Enc}_{θ}\left({Dec}_{θ}\left({Enc}_{θ}\left(X+ϵ\right)\right)\right),{Enc}_{θ}\left(X+ϵ\right)\right) ,$ *L_{consist}* being the second loss function, *Diff* being a function of measuring a difference between the first information and the second information, *Enc_{θ}* being a function of the encoder, *Dec_{θ}* being a function of the decoder, *θ* being a parameter of the encoder and the decoder, *X* being the input image, *ε* being an additional noise such as an additional damage.

The training the encoder and the decoder may include training the encoder and the decoder to minimize a sum of the first loss function and the second loss function based on the input image, the global anomaly may include one or more of a noise anomaly, a blur anomaly, and a contrast anomaly of the measured image, and the local anomaly may include one or more of a shape anomaly, a particle anomaly, and a crack anomaly for the measured image.

The method may include selecting a pair of images, the pair of images being a first image and a second image being similar to each other according to a similarity evaluation metric, adding synthesis noise to the first image and the second image, and substituting a first portion of first pixel values from the first image with corresponding second pixel values of the second image, the substituted first pixel values being placed at first locations in the first image corresponding to respective second locations in the second image, to generate the input image.

In an aspect, there is provided an electronic apparatus comprising processing circuitry comprising one or more processors, a memory, an encoder and a decoder. The memory includes one or more storage media storing instructions that, when executed by the processing circuitry, cause the electronic apparatus to provide a measured image to an encoder, obtain a feature produced from the encoder as a noise-invariant feature, pass the noise-invariant feature through a decoder, obtain an image produced from the decoder as a denoised image, detect a local anomaly of the measured image using the noise-invariant image. A global anomaly of the measured image may be detected using the denoised feature.

The instructions may further cause the electronic apparatus to obtain an input image to be input to the encoder, load a first loss function related to the detection of the global anomaly of the measured image into the memory, load a second loss function related to the detection of the local anomaly of the measured image into the memory, and train the encoder and the decoder based on the input image, the first loss function, and the second loss function.

The instructions may further cause the electronic apparatus to generate a reconstructed image by passing the input image through the encoder and the decoder and generate the first loss function to minimize a first difference between the input image and the reconstructed image.

The instructions may further cause the electronic apparatus to generate the second loss function to minimize a second difference between first information obtained by passing the reconstructed image through the encoder and second information obtained by passing the input image through the encoder.

The obtaining the input image may include selecting a pair of images, the pair of images being a first image and a second image being similar to each other according to a similarity evaluation metric, adding synthesis noise to the first image and the second image, and substituting a first portion of first pixel values from the first image with corresponding second pixel values of the second image, the substituted first pixel values being placed at first locations in the first image corresponding to respective second locations in the second image.

### BRIEF DESCRIPTION OF THE DRAWINGS

FIG. 1 illustrates an example system with anomaly detection according to one or more embodiments.
FIGs. 2 and 3 illustrate example images with anomaly detection according to one or more embodiments.
FIG. 4 illustrates an example device with anomaly detection according to one or more embodiments.
FIG. 5 illustrates an example process with anomaly detection according to one or more embodiments.
FIG. 6 illustrates an example process with anomaly detection according to one or more embodiments.
FIG. 7 illustrates an example process with anomaly detection according to one or more embodiments.
FIG. 8 illustrates an example device with anomaly detection according to one or more embodiments.
FIG. 9 illustrates an example method with an anomaly detection according to one or more embodiments.
FIG. 10 illustrates an example method with an anomaly detection according to one or more embodiments.
FIG. 11 illustrates an example method with an anomaly detection according to one or more embodiments.
FIG. 12 and FIG. 13 illustrate example images with anomaly detection according to one or more embodiments.
FIG. 14 illustrates an example electronic apparatus according to one or more embodiments.
Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example", "embodiment", and "example embodiment" herein have a same meaning (e.g., the phrasing 'in an or one example' has a same meaning as 'in an or one embodiment" and 'in an or one example embodiment'), and "one or more examples" has a same meaning as "one or more embodiments" and "one or more example embodiments". Still further, each of multiple or all separately described an/one "example", "embodiment", "example embodiment", as well as "examples", "embodiments", "example embodiments", herein may be included, in combination, in a same embodiment in any combination.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used in connection with various example embodiments of the disclosure, any use of the terms "module" or "unit" means hardware and/or processing hardware configured to implement software and/or firmware to configure such processing hardware to perform corresponding operations, and may interchangeably be used with other terms, for example, "logic," "logic block," "part," or "circuitry". As one non-limiting example, an application-predetermined integrated circuit (ASIC) may be referred to as an application-predetermined integrated module. As another non-limiting example, a field-programmable gate array (FPGA) or an application-specific integrated circuit (ASIC) may be respectively referred to as a field-programmable gate unit or an application-specific integrated unit. In a non-limiting example, such software may include components such as software components, object-oriented software components, class components, and may include processor task components, processes, functions, attributes, procedures, subroutines, segments of the software. Software may further include program code, drivers, firmware, microcode, circuits, data, database, data structures, tables, arrays, and variables. In another non-limiting example, such software may be executed by one or more central processing units (CPUs) of an electronic device or secure multimedia card.

Unless otherwise defined, all terms, including technical and scientific terms, used herein have the same meaning as commonly understood by one of ordinary skill in the art to which this disclosure pertains and specifically in the context on an understanding of the disclosure of the present application. Terms, such as those defined in commonly used dictionaries, are to be interpreted as having a meaning that is consistent with their meaning in the context of the relevant art and specifically in the context of the disclosure of the present application, and are not to be interpreted in an idealized or overly formal sense unless expressly so defined herein.

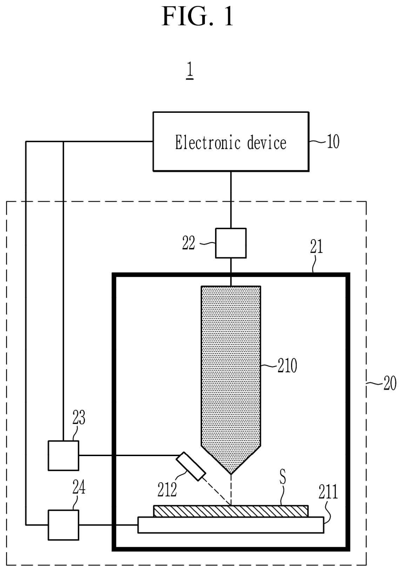

FIG. 1 illustrates an example system with anomaly detection according to one or more embodiments.

Referring to FIG. 1, in a non-limiting example, a system 1 with anomaly detection may include an electronic device 10 with anomaly detection which may be implemented as a computing device and a scanning electron microscope (SEM) 20.

In an example, the SEM 20 may be a device or system that detects a secondary electron or backscattered electron signal produced by scanning a high energy electron beam that is applied to a sample surface, the SEM 20 to analyze a microstructure, a surface shape, a composition, and other physical characteristics of the sample. In some examples, the SEM 20 may include a chamber 21 and controllers 22, 23, and 24. The chamber 21 may provide an inspection space in which a sample S is placed and an electron beam is irradiated and the chamber may be maintained in a vacuum state, for example, by a vacuum pump during the scanning. Here, the sample S may include a silicon wafer, a semiconductor device divided into individual dies, etc.

The chamber 21may include an electron gun 210, a test stage 211, and a detector 212 therein. The electron gun 210 may produce an electron beam under the control of the controller 22 and irradiate the electron beam toward the sample S on the test stage 211. The test stage 211 may support the sample S, and the controller 24 may move the test stage 211. The detector 212 detects a signal, for example, a secondary electron or backscattered electron signal, emitted from the sample S, and the controller 23 receives the detected information and provides it to the electronic device 10. The electronic device 10 may obtain an SEM image by forming numerical data for the electric signal received from the detector 212 and thus, defects may be detected within the SEM image.

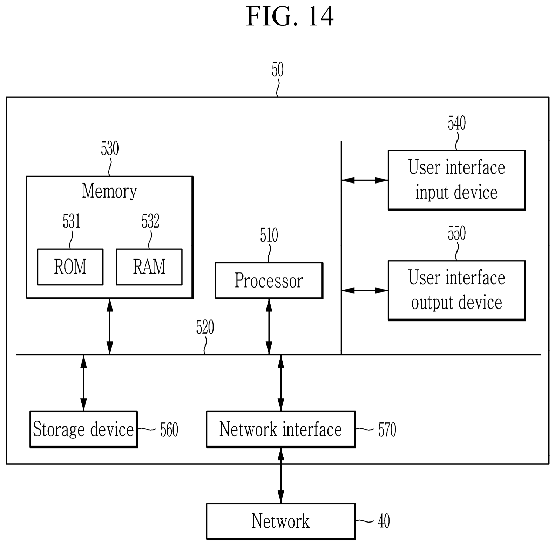

The electronic device 10 may execute a program code or instruction loaded on one or more memory devices through one or more processors. For example, the electronic device 10 may be implemented as an electronic device 50 which may perform computing functions as described in greater below with reference to FIG. 14. In this case, one or more processors may correspond to the processor 510 of the electronic device 50, and one or more memory devices may correspond to the memory 530 of the electronic device 50. The program code or instructions may be executed by one or more processors to detect the anomaly.

While the SEM 20 is described as being used in the system 1 with anomaly detection for the sake of clarity and convenience, this configuration is an example and is not intended to limit the scope of the present disclosure, and the SEM 20 may be replaced by an optical microscope, an electron microscope, or other high-resolution photographing equipment other than the SEM, for example. That is, although the electronic device 10 and methods for detecting anomalies as described in greater detail below are mainly described in relation to processing SEM images acquired via the SEM 20, the scope of the present disclosure may include cases of processing any other type of image, other than solely SEM images.

In an example, the electronic device 10 may extract noise-free information and a noise-removed image (a denoised image) from an image including a noise (i.e., a noisy image) based on operations from an encoder and a decoder (i.e., extraction). The encoder may convert the input image into features, and features that may be output from the encoder may be restored to an original image through the decoder or used for subsequent processing, such as anomaly detection. The decoder may receive the features produced by the encoder as an input and reconstruct data similar to the original image. The decoder may restore structural elements and patterns of the image based on the features learned by the encoder, and may output the image with the noise removed or an abnormal detecting result. For example, the encoder and the decoder may be trained commonly in a direction that minimizes a loss function.

The electronic device 10 may detect the anomaly in the measured image based on the trained encoder and decoder. Here, the anomaly in the measured image may include global anomaly and local anomaly. The global anomaly may refer to an overall quality deterioration or distortion of the measured image, such as a noise anomaly, a blur anomaly, and a contrast anomaly of the measured image. For example, the noise anomaly may be a state in which the detailed structure of the image is distorted or the information is lost due to irregular signals or interference. For example, the blur anomaly may be a state in which the image is out of a focus or the boundaries are unclear, making the detailed information unclear, and in an example, the contrast abnormality may be a state in which the contrast between bright and dark regions in the image is abnormally reduced or increased, distorting a visual information. In a case of a global anomaly, it is generally a measurement error caused by a change in a noise level, and the cause of the global anomaly is likely to be a measurement equipment error.

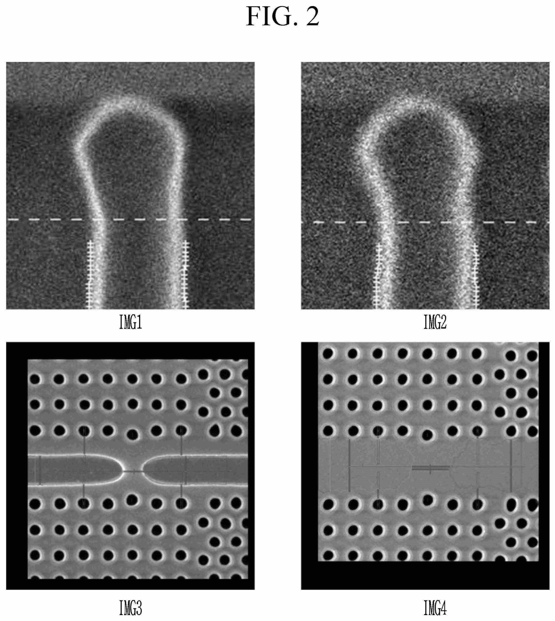

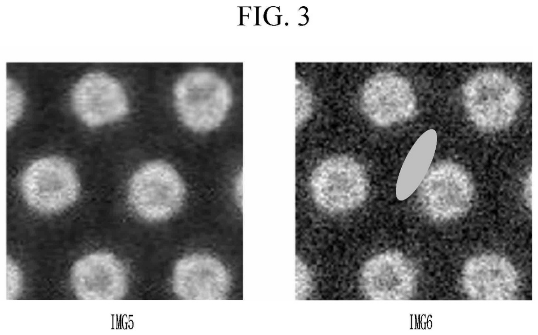

FIGs. 2 and 3 illustrate example images with anomaly detection according to one or more embodiments.

Referring to FIG. 2, in a non-limiting example, an image IMG1 may be a normal measured image, and an image IMG2 may be a measurement error image corresponding to a global anomaly.

Meanwhile, local anomaly may be caused by local quality problems or abnormal deformations in a specific region within the image, and examples can include a shape anomaly, a particle anomaly, and a crack anomaly for the measured image. For example, the shape anomaly may be a state in which the appearance of the structure is deformed or distorted differently from an expected shape. For example, the particle anomaly may be a state in which a particle's size, shape, or density appears abnormal in a specific region, and, in an example, the crack anomaly may be a state where linear or nonlinear cracks are observed in the image. In the case of the local anomaly, they are usually measurement errors caused by the changes in the structure, and the cause of the local anomaly may likely be process errors.

Referring to FIG. 2, in a non-limiting example, an image IMG3 may be a normal measured image, and image IMG4 may be a measurement error image corresponding to the local anomaly.

In an example, the electronic device 10 may provide an analysis by separating the global anomaly and the local anomaly, as described in greater detail below. To this end, the electronic device 10 may be equipped with an encoder and a decoder trained to analyze the global anomaly and the local anomaly separately. The training for the encoder and the decoder will be described in greater detail below.

Specifically, the electronic device 10 may input the measured image to the encoder. Here, the measured image may refer to data that may include the noise, blur, and contrast anomaly, and the structural deformation, as an image acquired using, for example, a SEM, optical microscope, or other high-resolution measurement equipment in a semiconductor manufacturing process.

The electronic device 10 may obtain the features produced from the encoder as noise-invariant features. The noise-invariant features may be used to extract meaningful information independent of the noise from the measured image and to detect the local anomaly in the measured image.

The electronic device 10 may pass the noise invariant features to the decoder and obtain the image produced from the decoder as a denoised image. The electronic device 10 may pass the noise-invariant features to the decoder and obtain the image generated from the decoder as a denoised image. The denoised image (i.e., when a noisy image has some or all of its noise removed) may be an image in which the original structural information of the image are restored and the detailed patterns and features are clearly expressed.

The electronic device 10 may detect the measured image's global anomaly by using the denoised image. Specifically, the electronic device 10 may detect at least one of the noise anomaly, the blur anomaly, and the contrast anomaly of the measured image by using the denoised image. The noise anomaly is caused by irregular interference signals or random fluctuations in the image, and this anomaly may be quantitatively evaluated by the comparison with the denoised image. The blur anomaly is a quality deterioration that appears as an out-of-focus or an unclear boundary in the image, and these anomalies may be detected through analysis of the differences in detail compared to the denoised image. The contrast anomaly is a condition in which the ratio of brightness and darkness in the image changes abnormally, and the presence of the anomaly may be determined by the comparison with the normal contrast ratio of the denoised image.

Meanwhile, the electronic device 10 may detect the local anomaly in the measured image by using the noise-invariant features. Specifically, the electronic device 10 may detect at least one of the shape anomaly, the particle anomaly, and the crack anomaly for the measured image by using the noise-invariant features. The shape anomaly is a condition in which the shape of the structure in the measured image is distorted or does not match the expected geometric pattern, and may be detected by comparing it with a normal structure based on the noise-invariant features. The particle anomaly is a condition in which the size, density, or arrangement of the particles is abnormal in the specific region in the image, and the crack anomaly represents a linear or nonlinear split or gap in the image, and may be detected through the analysis based on the noise-invariant features.

Accordingly, the electronic device 10 may detect the global anomaly and the local anomaly separately when the global anomaly and the local anomaly are mixed, as illustrated in FIG. 3. Referring to FIG. 3, the image IMG5 may be a normal measured image, and the image IMG6 may be a measurement error image that includes both global anomalies and local anomalies. In typical detection scenarios, only the presence or absence of the anomaly was determined without distinguishing between the global anomaly and the local anomaly, each of which had different causes for the occurrence of the anomaly for the image IMG6. Therefore, it has been typically difficult to clearly identify the occurrence causes of the anomaly or establish appropriate response measures for each anomaly. On the other hand, in an example, the an electronic device with defect detection (i.e., electronic device 10) may diagnose errors in the measuring equipment and problems in the process independently by analyzing the image IMG6 to detect the global anomaly and the local anomaly separately.

The electronic device 10 may train the encoder and the decoder to analyze the global and local anomalies separately. Specifically, the encoder and decoder may be trained based on an input image for inputting to the encoder, a first loss function related to the global anomaly detection of the measured image, and a second loss function related to the local anomaly detection of the measured image.

In an example, the first loss function may be predetermined to minimize a difference between the input image and the reconstructed image obtained by passing the input image through the encoder and the decoder. For example, the first loss function as the reconstruction loss, which may measure the pixel difference between the input image and the reconstructed image, and may be generally defined as a difference measurement function such as a mean squared error (MSE) or a mean absolute error (MAE). The first loss function may be set to induce the decoder to accurately restore the detailed structure and the pattern of the input image, and to optimize the quality of the reconstructed image by particularly reflecting the global anomaly.

In an example, the first loss function may be determined according to Equation 1 below. ${L}_{rec} = Diff \left({Dec}_{θ}\left({Enc}_{θ}\left(X+ϵ\right)\right),X\right)$

Here, *L_{rec}* may be the first loss function, *Diff* may be a function of measuring the difference between the reconstructed image and the input image, *Enc_{θ}* may be a function of the encoder, *Dec_{θ}* may be a function of the decoder, *θ* may be a parameter of the encoder and the decoder, X may be the input image, and *ε* may be an additional noise, such as an additional damage. That is, *L_{rec}* may measure the difference between the reconstructed image produced by adding additional noise *ε* to the input image *X* and passing it through the encoder *Enc_{θ}* and the decoder *Dec_{θ}* and the original input image *X.* Accordingly, the first loss function may effectively reflect the global anomaly and restore the image by training the encoder and the decoder in a direction that minimizes the difference between the input image and the reconstructed image. Additionally, by adding additional noise *ε*, a generalization performance of a model may be improved so that the encoder and decoder may accurately restore the information of the input image (i.e., a noise image) even under various noise conditions.

In an example, the second loss function may be determined to minimize a difference between the first information obtained by passing the reconstructed image through the encoder and the second information obtained by passing the input image through the encoder. For example, the second loss function may be a consistency loss, which may measure a similarity between the features produced after passing the input image through the encoder and the features produced after passing the reconstructed image through the decoder.

In an example, the second loss function may be determined according to Equation 2 below.${L}_{consist} = Diff \left({Enc}_{θ}\left({Dec}_{θ}\left({Enc}_{θ}\left(X+ϵ\right)\right)\right),{Enc}_{θ}\left(X+ϵ\right)\right)$

Here, *L_{consist}* may be the second loss function, *Diff* may be a function of measuring a difference between the first information and the second information, *Enc_{θ}* may be a function of the encoder, *Dec_{θ}* may be a function of the decoder, *θ* may be a parameter of the encoder and the decoder, *X* may be the input image, *ε* may be an additional noise such as an additional damage. That is, *L_{consist}* may measure between features produced by adding the additional noise *ε* to the input image *X* and then, repeatedly passing it through the encoder *Enc_{θ}* and the decoder *Dec_{θ},* and the features produced directly through the encoder *Enc_{θ}* after adding the addition noise *ε* to the original input image *X*. Accordingly, the second loss function may guide the learning to maintain consistency of the information independent of the noise, and ensure that original important features are preserved even when the image reconstructed through the decoder passes through the encoder again. Through this, the electronic device 10 may implement a learning structure that may effectively detect not only the global anomaly but also the local anomaly in the input image.

In an example, the electronic device 10 may first obtain an input image to input to the encoder for training the encoder and decoder. In some examples, the electronic device 10 may select a pair of images from an image database that are judged to be similar to each other according to a predetermined similarity evaluation metric, and a synthesis noise may be added to each pair of images. Here, the similarity evaluation metric may be a reference used to quantitatively evaluate the similarity between images, and may be determined based on a structural similarity index (SSIM), the difference (a mean squared error (MSE)) between pixels, or a histogram similarity. For example, a similarity between two images may be measured using the SSIM as the similarity evaluation metric and the value may be calculated between 0 and 1. At this time, if the SSIM value is a predetermined threshold value anomaly, the two images may be determined to be similar. Meanwhile, the synthesis noise is a noise that is artificially added to the input image and may include forms such as Gaussian noise, speckle noise, or JPEG compression artifact. The Gaussian noise may be produced by adding a random signal that follows a normal distribution, and the speckle noise may be used to distort the texture of an image. The JPEG compression artifact may be produced by mimicking a block-based distortion that occurs during the compression process.

Next, in an example, the electronic device 10 may produce the input image by substituting some pixel values of the pixel values of the first image among the selected pair of images with the pixel values at positions that are the same as the positions corresponding to some pixel values of the first image among the other second image among the pair of images. That is, a first portion of first pixel values from the first image may be substituted, or replaced, with corresponding second pixel values of the second image, and the substituted first pixel values may be placed at first locations in the first image that correspond to respective second locations in the second image. For example, after randomly selecting 10% of the pixels in the first image, those pixel values may be replaced with the pixel values at the same positions in the second image. This substituted noise may correspond to the global noise such as the Gaussian noise, and may be used to add a noise that includes a dependency between the pixels that cannot be obtained from the Gaussian noise.

For this purpose, pixel values at a same position in the similar SEM images may be extracted and used for the substitution. This substituted noise may be used to model the local anomaly, and may reproduce problems that may occur in the actual measured images, such as the shape anomaly, the particle anomaly, and the crack anomaly, as training data. The substituted ratio may be adjusted according to a predetermined parameter, and the higher the substituted pixel ratio, the greater the degree of distortion of the input image. Through this, the electronic device 10 may enhance the local anomaly detection performance.

The electronic device 10, in this way, may first obtain the input image so as to input it (i.e., provide it) to the encoder for training the encoder and the decoder, and then load the first loss function related to the global anomaly detection of the measured image into the memory. Additionally, the electronic device 10 may also load the second loss function related to the local anomaly detection of the measured image into the memory. Next, the electronic device 10 may train the encoder and the decoder based on the input image, the first loss function, and the second loss function. In some examples, the electronic device 10 may train the encoder and the decoder to minimize a sum of the first loss function and the second loss function based on the input image.

In an example, when the global anomaly and the local anomaly are mixed, the global anomaly and the local anomaly may be detected separately, and errors in the measuring equipment and problems in the process may be diagnosed independently.

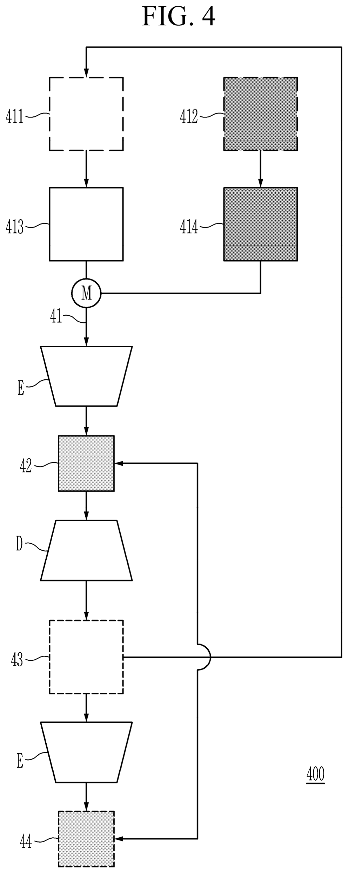

FIG. 4 illustrates an example device with anomaly detection according to one or more embodiments.

Referring to FIG. 4, in a non-limiting example, a device with anomaly detection 400 is illustrated.

In an example, a learning may be performed by reducing a sum of two losses. The first loss may be the first loss as explained above, which may induce the encoder E and the decoder D to produce the image 43 in which the global feature is removed.

First, two similar SEM image, an image pair 411 and 412 may be received from the SEM image database as an input. In an example, the image pair 411 and 412 may be noisy images, that is they include noise. By adding the additional synthesis noise such as the Gaussian noise, the speckle noise, and the JPEG effects, images 413 and 414 may be produced by further globally damaging the two images of the image pair 411 and 412. Next, in an example, to model non-parametrizable noise, 10% of the pixel values in the image (i.e., one of an image pair 413 and 414) may be substituted with the pixel values at a same position in another image (the other of the image pair 413 and 414). Afterwards, an L1 loss between the image 43 obtained through the encoder E and decoder D and the image 41, which was received as the first input, may be calculated.

The second loss, as explained above, may be a loss that makes the encoder E extract the same information for two images with different global features. The restored image 43 obtained in the process of calculating the first loss is input back into the encoder E to extract the information 44, and similarly, the loss L1 may be calculated with the information 42 extracted by the encoder from the image including the global noise that was obtained in the process of calculating the first loss.

As a result, by training to minimize the sum of two losses over the entire database, the encoder and decoder structures may be trained to recover the image from which the global features have been removed, and to extract the same information from the damaged and recovered images. Through this, a noise-invariant encoder-decoder structure may be obtained.

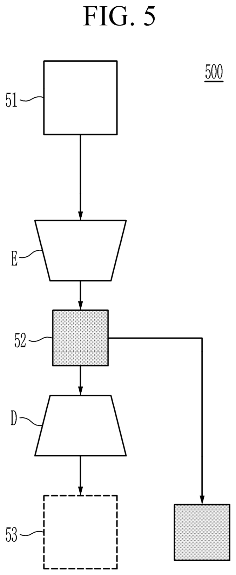

FIG. 5 illustrates an example process with anomaly detection according to one or more embodiments.

Referring to FIG. 5, in a non-limiting example, a process 500 with an inference based on an encoder and decoder of a device with anomaly detection (e.g., electronic device 10),is illustrated.

In an example, when utilizing the learned noise-invariant encoder-decoder, the SEM image 51 may be received as an input and two outputs of the image 53 that the noise is removed and the information 52 that is not affected by the noise may be obtained.

Specifically, the SEM image 51 provided as an input may include a noise, and the encoder E and the decoder D may process it to produce a clean restored image by removing the noise from the image. In addition, the encoder E may exclude the influence of the noise and extract the essential and structural information (e.g., a shape, a particle distribution, a crack pattern, etc.) 52 of the SEM image. This information may be used to analyze the detailed structural change including the local anomaly, or for the anomaly detection and the process diagnosis. As a result, by simultaneously providing the image with the denoised image and the essential structure information through the learned noise-invariant encoder decoder, a more precise and efficient analysis may be performed in the semiconductor measurement and inspection process.

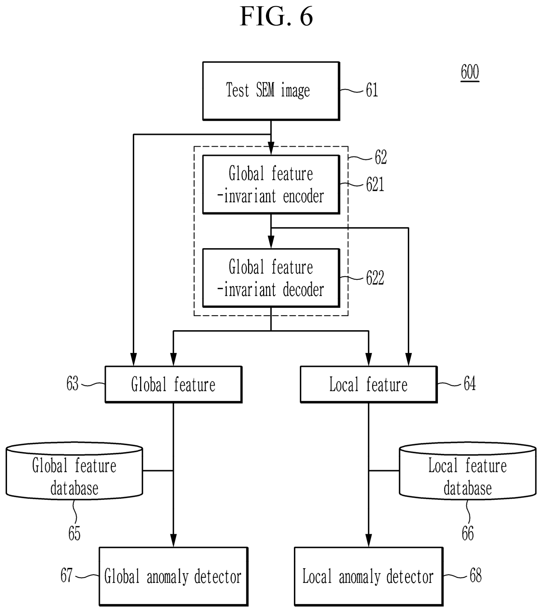

FIG. 6 illustrates an example process with anomaly detection according to one or more embodiments.

Referring to FIGa. 6, in a non-limiting example, a process with anomaly detection 600 may include a noise-invariant auto encoder 62, as part of a device with anomaly detection (e.g., electronic device 10), and the noise-invariant auto encoder 62 may include a global feature-invariant encoder 621 and a global feature-invariant decoder 622. In the process 600, a test SEM image 61 may be input, or provided, to the global feature-invariant encoder 621 and a local feature 64 produced from the global feature-invariant encoder 621 may be obtained. Specifically, the local feature 64 may be produced by the global feature-invariant encoder 621 to reflect changes in a shape, particle, and crack from the test SEM image 61. Meanwhile, a global feature 63 produced from the global feature-invariant decoder 622 may be obtained. Specifically, the global feature 63 may be produced by the global feature-invariant encoder 621 and the global feature-invariant decoder 622 to reflect changes in a noise, blur, and contrast ratio from the test SEM image 61.

In an example, the process 600 may include storing and managing the global feature 63 and the local feature 64 acquired in this manner through the global feature database 65 and the local feature database 66, respectively, and perform global anomaly detection through the global anomaly detector 67 based on the global feature 63. Meanwhile, the local anomaly detection may be performed through the local anomaly detector 68 based on the local feature 64.

For example, the global anomaly detector 67 may detect the global anomaly such as a noise level, a blur level, and a contrast ratio change by comparing the global features of the normal images stored in the global feature 63 and the global feature database 65. To this end, the similarity evaluation metric such as the mean square error and the SSIM may be used to quantitatively analyze the difference from the normal image, and if a difference occurs due to a specific threshold value anomaly, it may be judged as the global anomaly. Meanwhile, the local anomaly detector 68 may detect the local anomaly such as the shape anomaly, the particle anomaly, and the crack anomaly by comparing the local features 64 and the local features of the normal images stored in the local feature database 66. The local anomaly detected through the similarity evaluations, including a cosine similarity or a L1 loss, may be recorded along with the occurrence position and used for a fault analysis and a process diagnosis.

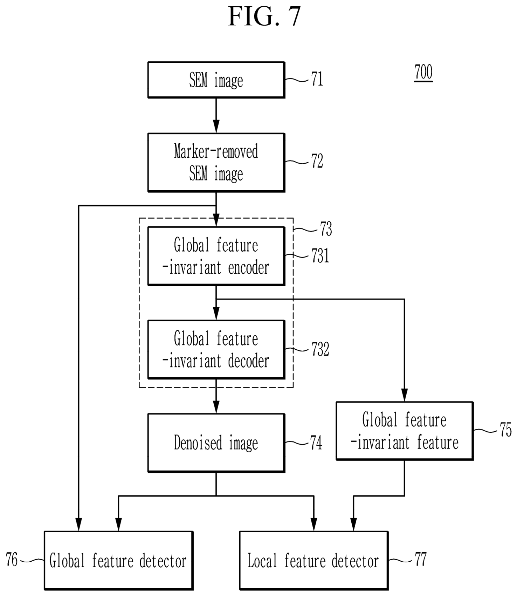

FIG. 7 illustrates an example process with anomaly detection according to one or more embodiments.

Referring to FIG. 7, in a non-limiting example, a process with anomaly detection 700 may include a noise-invariant auto encoder 73, as part of a device with anomaly detection (e.g., electronic device 10), and the noise-invariant auto encoder 73 may include a global feature-invariant encoder 731 and a global feature-invariant decoder 732.

In an example, the process 700 may include removing measurement markers from the SEM image 71 before inputting the SEM image 71 to the global feature-invariant encoder 731. The measurement markers may be used to display measured information of a semiconductor image, and may include uniformly colored marks, lines, graphs, etc. The measurement markers may cause problems such as increased computational costs as the size of the network increases and a training may be prolonged when the noise-invariant auto encoder 73 tries to restore them. To address this, the process 700 may include removing the measurement markers in advance from the SEM image 71 by using a separately trained marker removal artificial nervous network model. Accordingly, the learning efficiency of the noise-invariant auto encoder 73 may be improved over a typical encoder, and the learning accuracy for the noise-invariant characteristic may also be improved over typical methods and devices.

In an example, a marker-removed SEM image 72 obtained by removing the measurement marker from the SEM image 71 may be input, or provided, to the global feature-invariant encoder 731, and a global feature-invariant feature 75 produced from the global feature-invariant encoder 731 may be obtained. Meanwhile, a denoised image 74 produced from the global feature-invariant decoder 732 may be obtained.

In an example, the process 700 may include performing the global anomaly detection through a global feature analyzer 76 by using the denoised image 74 and the marker-removed SEM image 72, as described above. Meanwhile, local anomaly detection may be performed through a local feature analyzer 77 based on the global denoised image 74 and the global feature-invariant feature 75.

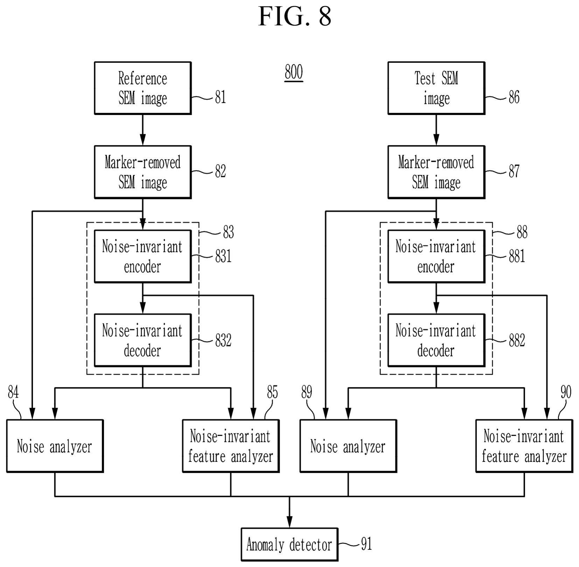

FIG. 8 illustrates an example device with anomaly detection according to one or more embodiments.

Referring to FIG. 8, in a non-limiting example, a process with anomaly detection 800 may include a noise analyzer 84 and 89, a noise-invariant feature analyzer 85 and 90, and an anomaly detector 91, as part of a device with anomaly detection (e.g., electronic device 10), to compositely utilize noise information and noise-invariant information. Here, the noise analyzer 84 and the noise analyzer 89 are given different reference numbers for a conceptual distinction, and in terms of an implementation, they may be implemented as separate elements or as the same element. Also, the noise-invariant feature analyzer 85 and the noise-invariant feature analyzer 90 are given different reference numbers for a conceptual distinction, and in terms of an implementation, they may be implemented as separate elements or as the same element.

In an example, the process 800 may further include a noise-invariant auto encoder 83, as part of a device with anomaly detection (e.g., electronic device 10), and the noise-invariant auto encoder 83 may include a noise-invariant encoder 831 and a noise-invariant decoder 832. Additionally, the device may include a noise-invariant auto encoder 88, and the noise-invariant auto encoder 88 may include a noise-invariant encoder 881 and a noise-invariant decoder 882. Here, the noise-invariant auto encoder 83 and the noise-invariant auto encoder 88, the noise-invariant encoder 831 and the noise-invariant encoder 881, and the noise-invariant decoder 832 and the noise-invariant decoder 882 are given different reference numbers for a conceptual distinction, and in terms of an implementation, they may be implemented as separate elements or as a single element, respectively.

In an example, a marker-removed SEM image 82, which was obtained by removing the measurement marker from the reference SEM image 81, may be input to the noise-invariant encoder 831, and a noise-invariant feature produced from the noise-invariant encoder 831 may be obtained. Meanwhile, a denoised image may be produced from the noise-invariant decoder 832. An analysis on the global anomaly may be performed by inputting the denoised image into the noise analyzer 84, and the analysis may be performed on the local anomaly by inputting the denoised image and the noise-invariant feature into the noise-invariant feature analyzer 85.

Meanwhile, the marker-removed SEM image 87, which is obtained by removing the measurement marker from the test SEM image 86, may be input, or provided, to the noise-invariant encoder 881, and a noise-invariant feature may be produced by the noise-invariant encoder 881. Meanwhile, the denoised image may be produced from the noise-invariant decoder 882. The analysis on the global anomaly may be performed by inputting the denoised image into the noise analyzer 89, and the analysis on the local anomaly may be performed by inputting the denoised image and the noise-invariant feature into the noise-invariant feature analyzer 90.

The analysis results performed by the noise analyzers 84 and 89 and the noise-invariant feature analyzers 85 and 90 may be collected by the anomaly detector 91 and a final anomaly detection may be performed.

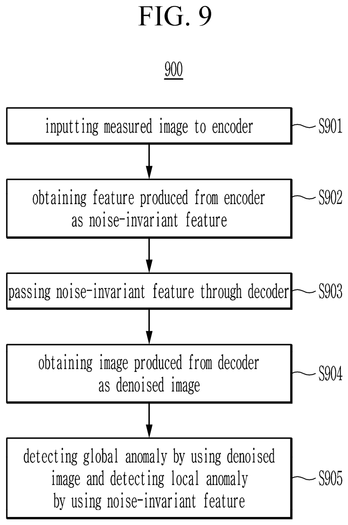

FIG. 9 illustrates an example method with an anomaly detection according to one or more embodiments.

Referring to FIG. 9, in a non-limiting example, an electronic device (e.g., electronic device 10) may perform a method with anomaly detection 900 which may include a step S901 of inputting a measured image to an encoder, a step S902 of obtaining a feature produced from the encoder as a noise-invariant feature, a step S903 of passing the noise-invariant feature through the decoder, a step S904 of obtaining the image produced from the decoder as a denoised image, and a step S905 of detecting a global anomaly by using the denoised image and detecting a local anomaly by using the noise-invariant feature.

For more detailed contents about method 900, reference may may be made to the description of the examples as described throughout the present specification, so a redundant description is omitted here.

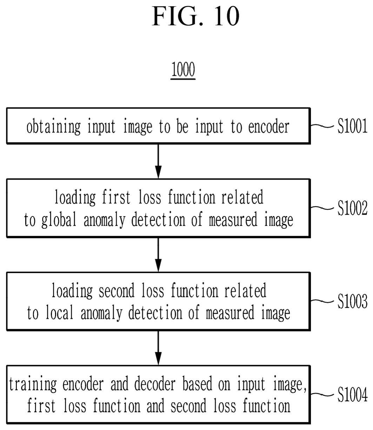

FIG. 10 illustrates an example method with an anomaly detection according to one or more embodiments.

Referring to FIG. 10, in a non-limiting example, an electronic device (e.g., electronic device 10) may perform a method with anomaly detection 1000 which may include a step S1001 of obtaining an input image to be input to a encoder, a step S1002 of loading a first loss function related to a global anomaly detection of a measured image, a step S1003 of loading a second loss function related to a local anomaly detection of the measured image, and a step S1004 training an encoder and a decoder based on the input image, a first loss function and a second loss function.

For more detailed contents about method 1000, reference may may be made to the description of the examples as described throughout the present specification, so a redundant description is omitted here.

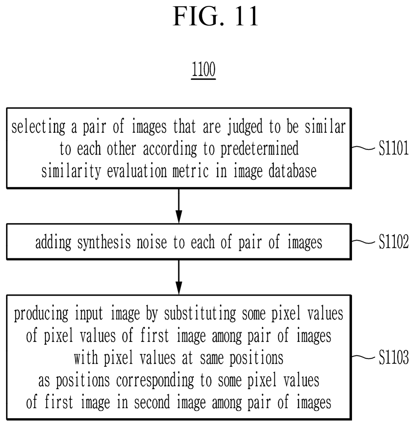

FIG. 11 illustrates an example method with an anomaly detection according to one or more embodiments.

Referring to FIG. 11 in a non-limiting example, an electronic device (e.g., electronic device 10) may perform a method with anomaly detection 1100 which may include a step S1101 of selecting a pair of images that are judged to be similar to each other according to a predetermined similarity evaluation metric in an image database, a step S1102 of adding synthesis noise to each of the pair of images, and a step S1103 of producing an input image by substituting some pixel values of the pixel values of the first image among the pair of images with the pixel values at the same positions as the positions corresponding to some pixel values of the first image in the second image among the pair of images.

For more detailed contents about method 1100, reference may may be made to the description of the examples as described throughout the present specification, so a redundant description is omitted here.

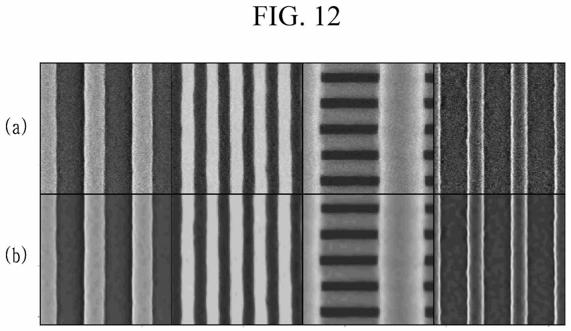

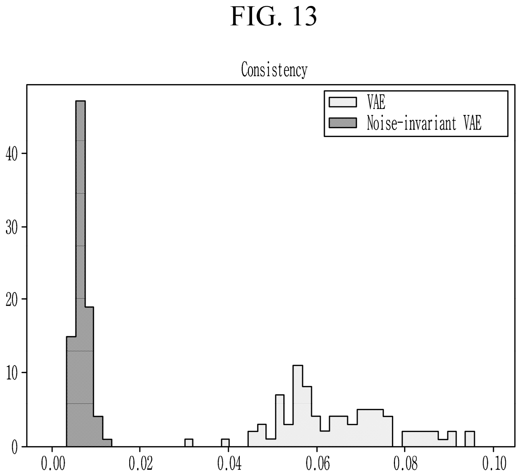

FIG. 12 and FIG. 13 illustrate example images with anomaly detection according to one or more embodiments.

Referring to FIG. 12, in a non-limiting example, the images in the first row indicated as (a), may illustrate SEM images with a noise (i.e., noisy SEM images), and the images in the second row, indicated as (b), may illustrate SEM images reconstructed so as to remove a noise (i.e., reconstructed SEM images). A denoised image reconstructed in this way may be used to quantitatively calculate a degree of the noise included in the image by comparing it with the original image including the noise.

Referring to FIG. 13, in a non-limiting example, a result of measuring a consistency by using the consistency loss presented through the embodiments in a histogram is illustrated, where a y-axis represents a frequency and an x-axis represents a consistency (referring to Equation 2). When comparing the noise-invariant auto encoder based on embodiments with a typical auto encoder that was trained using only the reconstruction loss, it may be confirmed that the noise-invariant auto encoder based on the embodiments represents a value providing higher consistency. Accordingly, a noise-invariant auto encoder such as an electronic device with anomaly detection (e.g., electronic device 10) as described above may effectively extract and maintain information and structural characteristics so that they are not affected by the noise.

FIG. 14 illustrates an example electronic apparatus according to one or more embodiments.

Referring to FIG. 14, in a non-limiting example, an electronic device with anomaly detection (e.g., electronic device 10) and a method with anomaly detection (e.g., method 900) may be implemented using an electronic apparatus 50. The electronic device 50 may be implemented as various forms of computing devices, servers or similar devices thereto, and the functions thereof may be implemented through a combination of a software and a hardware.

In an example, the electronic device 50 may include at least one of a processor 510, a memory 530, a user interface input device 540, a user interface output device 550, and a storage device 560 communicating via a bus 520. The electronic device 50 may also include a network interface 570 electrically connected to a network 40. The network interface 570 may transmit or receive signals with other entities via the network 40.

The processor 510 may be configured to execute programs or applications to configure the processor 510 to control the electronic device 50 to perform one or more or all operations and/or methods involving providing of positional encoding to a neural network. The processor 510 may be implemented with various types of operating devices, such as a micro controller unit (MCU), an application processor (AP), a central processing unit (CPU), a graphic processing unit (GPU), a neural processing unit (NPU), and a quantum processing unit (QPU). The processor 510 may be a semiconductor device that executes instructions stored in the memory 530 or the storage device 560 and may play a key role in the system. Program code and data stored in the memory 530 or the storage device 560 instruct the processor 510 to perform specific tasks, thereby enabling system-wide operations. The processor 510 may be configured to implement various functions and methods described above with reference to FIG. 1 to FIG. 13.

The memory 530 may include computer-readable instructions. The processor 510 may be configured to execute computer-readable instructions, such as those stored in the memory 530, and through execution of the computer-readable instructions, the processor 510 may be configured to perform one or more, or any combination, of the operations and/or methods described herein. The memory 530 and the storage device 560 may include various forms of volatility or non-volatile storage media for storing and accessing the data of the system. For example, the memory 530 may include a read-only memory (ROM) 531 and a random access memory (RAM) 532. In some examples, the memory 530 may be embedded within the processor 510, in which case data transmission speed between the memory 530 and the processor 510 may be very fast. In some other examples, the memory 530 may be positioned external to the processor 510, in which case the memory 530 may be connected to the processor 510 via various data buses or interfaces. This connection may be made via a variety of known means, for example a Peripheral Component Interconnect Express (PCIe) interface for a high-rate data transmission or via a memory controller.

In some examples, at least some components or functions of the method and the device for detecting the anomaly according to the embodiments may be implemented as a program or a software running on the electronic device 50, and the program or software may be stored on a computer-readable recording medium or storage medium. Specifically, in an example, the computer-readable recording medium or storage medium may be to record a program for executing steps included in the implementation of the method and the device for detecting the anomaly to the computer including the processor 510 that executes the program or instruction stored in the memory 530 or the storage device 560.

In some examples, embodiments, at least some components or functions of the method and the device for detecting the anomaly may be implemented using the hardware or circuitry of the electronic device 50, or may be implemented as separate hardware or circuitry that can be electrically connected to the electronic device 50.

In an example, by restoring the denoised image, a high quality image may be provided in the semiconductor measurement and inspection process, and the noise level of the image may be quantitatively calculated to improve the noise analysis and processing performance. Additionally, the anomaly detection (e.g., method 900) may be performed effectively based on the restored image and information which is no longer affected by the noise.

The electronic devices, electronic apparatuses, memories, processors, neural networks, electronic device 10, SEM 20, noise-invariant auto encoder 62, global feature-invariant encoder 621, global feature-invariant encoder 731, global feature-invariant decoder 732, a global feature-invariant decoder 622, noise analyzers 84 and 89, noise-invariant feature analyzers 85 and 90, anomaly detector 91, electronic device 50, processor 510, a memory 530, user interface input device 540, user interface output device 550, storage device 560, and network interface 570 described herein, including descriptions with respect to respect to FIGS. 1-14, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit (ALU), a digital signal processor (DSP), a microcomputer, a programmable logic controller, a field-programmable gate array (FPGA), a programmable logic array (PLU), a microprocessor, or any other device or combination of devices that is configured to respond to and execute instructions (e.g., code or coding) in a defined manner to achieve a desired result. In one example, a processor or computer includes, or is connected to, one or more memories storing the instructions or software that are executed by the processor or computer. Hardware components implemented by a processor or computer may execute the instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both, and thus while some references may be made to a singular processor or computer, such references also are intended to refer to multiple processors or computers. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing. Thus, references to a processor herein mean processing circuitry (e.g., circuitry that includes one or more processing element(s) circuits). One or more processors comprising processing circuitry also refers to each processor comprising processing circuitry, as well as some or all of the one or more processors comprising the same processing circuitry. In addition, processors(s) and controller(s), as a non-limiting example, do not mean human processing or human control, but rather, refer to hardware components as described herein, as non-limiting examples.

The methods illustrated in, and discussed with respect to, FIGS. 1-14 that perform the operations described in this application are performed by computing hardware, for example, by one or more processors or computers, implemented as described above implementing the instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations. References to a processor, or one or more processors, as a non-limiting example, configured to perform two or more operations refers to a processor or two or more processors being configured to collectively perform all of the two or more operations, as well as a configuration with the two or more processors respectively performing any corresponding one of the two or more operations (e.g., with a respective one or more processors being configured to perform each of the two or more operations, or any respective combination of one or more processors being configured to perform any respective combination of the two or more operations). Likewise, a reference to a processor-implemented method is a reference to a method that is performed by one or more processors or other processing or computing hardware of a device or system.

The instructions or software to control computing hardware, for example, one or more processors or computers, to implement the hardware components and perform the methods as described above may be written as computer programs, code segments, or other executable instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. Thus, references herein to storage media mean storage media hardware, and does not mean to transitory media, nor a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), a card type memory such as a multimedia card or a micro card (for example, secure digital (SD) or extreme digital (XD)), magnetic tapes, floppy disks, magneto-optical data storage devices, optical data storage devices, hard disks, solid-state disks, and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of all variations within the scope of the claims. Their equivalents are to be construed as being included in the disclosure.

## Claims

1. A method to be executed by processing circuitry comprising one or more processors, a memory, an encoder and a decoder, the method comprising:
inputting a measured image into the encoder;
obtaining a feature produced from the encoder as a noise-invariant feature;
passing the noise-invariant feature to the decoder;
obtaining an image produced by the decoder as a denoised image; and
detecting a local anomaly of the measured image by using the noise-invariant feature.

2. The method of claim 1, wherein the detecting the local anomaly comprises:
detecting one or more of a shape anomaly, a particle anomaly, and a crack anomaly for the measured image by using the noise-invariant feature.

3. The method of any one of claims 1-2, further comprising:
detecting a global anomaly in the measured image by using the denoised image.

4. The method of claim 3, wherein the detecting the global anomaly comprises:
detecting one or more of a noise anomaly, a blur anomaly, and a contrast anomaly of the measured image by using the denoised image.

5. The method of any one of claims 3-4, further comprising:
training the encoder and decoder based on an input image provided to the encoder, a first loss function related to the global anomaly detection of the measured image, and a second loss function related to the local anomaly detection of the measured image.

6. The method of claim 5, wherein the first loss function is generated to minimize a first difference between the input image and a reconstructed image obtained by passing the input image through the encoder and the decoder,
optionally wherein the second loss function is generated to minimize a second difference between first information obtained by passing the reconstructed image through the encoder and second information obtained by passing the input image through the encoder.

7. The method of any one of claims 5-6, further comprising generating the input image, the generating the input image comprising:
selecting a pair of images, the pair of images being a first image and a second image being similar to each other according to a similarity evaluation metric;
adding synthesis noise to the first image and the second image; and
substituting a first portion of first pixel values from the first image with corresponding second pixel values of the second image, the substituted first pixel values being placed at first locations in the first image corresponding to respective second locations in the second image.

8. A method to be executed by processing circuitry comprising one or more processors , a memory, an encoder and a decoder, optionally according to any one of the preceding claims, the method comprising:
loading a first loss function related to a global anomaly detection of a measured image into the memory;
loading a second loss function related to a local anomaly detection of the measured image into the memory; and
training the encoder and the decoder based on an input image being provided to the encoder, the first loss function, and the second loss function.

9. The method of claim 8, further comprising:
generating a reconstructed image by passing the input image through the encoder and the decoder,
wherein the first loss function is generated to minimize a first difference between the input image and the reconstructed image,
optionally wherein the generating of the first loss function is determined by a first equation of: ${L}_{rec} = Diff \left({Dec}_{θ}\left({Enc}_{θ}\left(X+ϵ\right)\right),X\right) ,$
wherein *L_{rec}* is the first loss function, *Diff* is a function of measuring the first difference , *Enc_{θ}* is a function of the encoder, *Dec_{θ}* is a function of the decoder, *θ* is a parameter of the encoder and the decoder, *X* is the input image, and *ε* is additional noise,
optionally wherein the second loss function is generated to minimize a second difference between first information obtained by passing the reconstructed image through the encoder and second information obtained by passing the input image through the encoder,
optionally wherein the generating of the second loss function is determined by a second equation of: ${L}_{consist} = Diff \left({Enc}_{θ}\left({Dec}_{θ}\left({Enc}_{θ}\left(X+ϵ\right)\right)\right),{Enc}_{θ}\left(X+ϵ\right)\right) ,$
wherein *L_{consist}* is the second loss function, *Diff* is a function of measuring a difference between the first information and the second information, *Enc_{θ}* is a function of the encoder, *Dec_{θ}* is a function of the decoder, *θ* is a parameter of the encoder and the decoder, *X* is the input image, *ε* is an additional noise such as an additional damage.

10. The method of claim 8, wherein the training the encoder and the decoder includes training the encoder and the decoder to minimize a sum of the first loss function and the second loss function based on the input image,
wherein the global anomaly includes one or more of a noise anomaly, a blur anomaly, and a contrast anomaly of the measured image, and
wherein the local anomaly includes one or more of a shape anomaly, a particle anomaly, and a crack anomaly for the measured image.

11. The method of claim 8, further comprising:
selecting a pair of images, the pair of images being a first image and a second image being similar to each other according to a similarity evaluation metric;
adding synthesis noise to the first image and the second image; and
substituting a first portion of first pixel values from the first image with corresponding second pixel values of the second image, the substituted first pixel values being placed at first locations in the first image corresponding to respective second locations in the second image, to generate the input image.

12. An electronic apparatus (10, 50), comprising:
processing circuitry comprising one or more processors , a memory, an encoder and a decoder,
the memory comprising one or more storage media storing instructions that, when executed by the processing circuitry, cause the electronic apparatus to:
provide a measured image to the encoder;
obtain a feature produced from the encoder as a noise-invariant feature;
pass the noise-invariant feature to the decoder;
obtain an image produced from the decoder as a denoised image; and
detect a local anomaly of the measured image using the noise-invariant image;
optionally detect a global anomaly of the measured image using the denoised feature,
optionally according to any one of the preceding claims.

13. The electronic apparatus of claim 12, wherein the instructions further cause the electronic apparatus to:
obtain an input image to be input to the encoder;
load a first loss function related to the detection of the global anomaly of the measured image into the memory;
load a second loss function related to the detection of the local anomaly of the measured image into the memory; and
train the encoder and the decoder based on the input image, the first loss function, and the second loss function.

14. The electronic apparatus of claim 13, wherein instructions further cause the electronic apparatus to:
generate a reconstructed image by passing the input image through the encoder and the decoder; and
generate the first loss function to minimize a first difference between the input image and the reconstructed image,
optionally wherein instructions further cause the electronic apparatus to:
generate the second loss function to minimize a second difference between first information obtained by passing the reconstructed image through the encoder and second information obtained by passing the input image through the encoder.

15. The electronic apparatus of any one of claims 13-14, wherein the obtaining the input image comprises:
selecting a pair of images, the pair of images being a first image and a second image being similar to each other according to a similarity evaluation metric;
adding synthesis noise to the first image and the second image; and
substituting a first portion of first pixel values from the first image with corresponding second pixel values of the second image, the substituted first pixel values being placed at first locations in the first image corresponding to respective second locations in the second image.
